# EUROPÄISCHE PATENTSCHRIFT

(11) **EP 0 940 448 B1**
(45) Veröffentlichungstag und Bekanntmachung des Hinweises auf die Patenterteilung: **09.03.2005**
(21) Anmeldenummer: 99101884.7
(22) Anmeldetag: 25.01.1999
(51) Int. Cl.: C08L 101/00, C08L 23/10, C08K 3/00

(54) **Verstärkte Zusammensetzung**
Reinforced composition
Composition renforcée

(30) Priorität: 03.03.1998 DE 19808888
(43) Veröffentlichungstag der Anmeldung: 08.09.1999
(73) Patentinhaber: Degussa AG, 40474 Düsseldorf (DE)
(72) Erfinder: Wey, Hans Günther Dr., 45470 Mülheim (DE); Bickert, Peter Dr., 48249 Dülmen (DE); Laven, Ralf Dr., 79739 Schwörstadt (DE)

(56) Entgegenhaltungen:
- EP-A- 0 510 559
- GB-A- 2 249 550
- US-A- 4 818 789

## Beschreibung

Gegenstand der Erfindung ist eine verstärkte Zusammensetzung, die einen Füllstoff bzw. ein faserförmiges Verstärkungsmittel sowie ein silangepfropftes Polyolefin enthält.

Die Verstärkung von Thermoplasten mittels eines Füllstoffes bzw. eines faserförmigen Verstärkuhgsmittels wie z. B. Glasfasern ist seit langem Stand der Technik. Mit dieser Maßnahme läßt sich der Elastizitätsmodul sehr wirkungsvoll erhöhen, jedoch ist häufig das Bruchverhalten unbefriedigend, was sich z. B. in einer deutlich erniedrigten Schlagzähigkeit äußert. In diesen Fällen findet man, daß nur eine schlechte oder gar keine Anbindung zwischen Polymermatrix und Verstärkungsmittel vorliegt. Auch die Reißfestigkeit ist stark von der Anbindung abhängig, so daß das volle Potential dieser Werkstoffkombination nur bei einer starken Phasenhaftung ausgenutzt werden kann. Diese Problematik stellt sich insbesondere bei Formmassen auf Basis von Polyolefinen oder Polyestern.

Eine Möglichkeit, die Phasenhaftung zwischen Polymermatrix und Verstärkungsmittel zu erhöhen, ist die Verwendung einer Schlichte. Obwohl hierzu schon seit langem umfangreiche Arbeiten existieren, ist das Ergebnis in vielen Fällen immer noch unbefriedigend, zumal das Schlichten des Verstärkungsmittels einen zusätzlichen Verfahrensaufwand verursacht.

In der japanischen Patentanmeldung JP-A-58217532 wird beschrieben, daß glasfaserverstärkte Polyolefinformmassen mit ausgezeichneten mechanischen Eigenschaften erhalten werden, wenn hierbei ein Polyolefin eingesetzt wird, das mit einem aliphatisch ungesättigten Trialkoxysilan radikalisch gepfropft wurde.

Über die Tatsache hinaus, daß man hierbei auf Polyolefinformmassen beschränkt ist, hat diese Methode noch einige Nachteile, die einer Nutzung entgegenstehen. Zum einen wird nämlich das gesamte Matrixmaterial umgeschmolzen und dabei funktionalisiert, was erhebliche zusätzliche Verfahrenskosten mit sich bringt. Insbesondere muß eine beträchtliche Menge des teuren Silans eingesetzt werden, wobei anschließend der nicht umgesetzte Anteil entfernt werden muß. Darüber hinaus erhält man unerwünschte Änderungen der Schmelzeviskosität, wobei im Falle von Polypropylen ein radikalischer Abbau und im Falle von Polyethylen ein radikalischer Aufbau stattfindet. Hinzu kommt noch als genereller Nachteil, daß die Einarbeitung von Glasfasern in eine hochviskose Polymerschmelze hohe Scherkräfte benötigt, was bei der Matrix zu einer Verringerung des Molekulargewichts fuhren kann, insbesondere führt dies aber zu einer erheblichen mechanischen Zerkleinerung der Fasern und damit zu einer Einbuße bei den mechanischen Eigenschaften. Insgesamt ist auf diese Weise das gezielte Einstellen einer gewünschten Spezifikation nahezu unmöglich.

In der japanischen Patentanmeldung JP-A-54064545 werden Formmassen beschrieben, die
a) 100 Gew.-Teile Polyolefin,
b) 2 bis 100 Gew.-Teile eines Polymers, bei dem ein Silan wie z. B. Vinyltrimethoxysilan auf Polyethylen, ein Copolymer auf Basis von Ethylen oder ein davon abgeleitetes halogeniertes Polymeres gepfropft ist, sowie
c) 10 bis 25 Gew.-Teile eines Verstärkungsmittels enthalten.

Auch hier ist die Einarbeitung des Verstärkungsmittels in die hochviskose Polymerschmelze problematisch.

Eine weitere, sehr spezielle und aus sehr vielen Komponenten bestehende Formmasse, die ein silanmodifiziertes Polypropylen enthält, ist in der DE-OS 41 36 687 sowie der äquivalenten GB-A-2 249 550 beschrieben.

In der US-A-4 818 789 werden Zusammensetzungen aus relativ niedermolekularen silangepfropften Olefineopolymeren offenbart, die Füllstoffe enthalten können und als witterungsbeständige Beschichtungen eingesetzt werden. Die EP-A-0 510 559 beschreibt thermoplastische elastomere Formmassen auf der Basis kristalliner thermoplastischer Polyolefine in Verbindung mit silangepfropftem EPM- oder EPDM-Kautschuk, die gummiartige Eigenschaften aufweisen.

Eine Aufgabe der vorliegenden Erfindung bestand darin, verstärkte Zusammensetzungen mit erhöhter Reißfestigkeit und verbesserter Schlagzähigkeit bereitzustellen, bei deren Herstellung ungeschlichtete Verstärkungsmittel eingesetzt werden können. Gemäß einer weiteren Aufgabe sollte die Wärmestandfestigkeit derartiger Zusammensetzungen weiter erhöht werden können. Weiterhin sollten die verstärkten Zusammensetzungen nach einem vereinfachten Verfahren hergestellt werden können, wobei gewünschte Spezifikationen gezielt eingestellt werden können.

Diese Aufgabe wird durch eine Zusammensetzung gelöst, die im wesentlichen folgende Komponenten enthält:
(a) 0 bis 98 Gew.-Teile eines oder mehrerer Thermoplaste,
(b) 2 bis 100 Gew.-Teile eines weitgehend amorphen Polyolefins mit weiter unten angegebenes Zusammensetzung, das mit einem Silan radikalisch gepfropft ist, welches mindestens eine olefinische Doppelbindung sowie eine bis drei direkt mit dem Silicium verbundene Alkoxygruppen besitzt, wobei dieses gepfropfte Polyolefin eine Schmelzeviskosität bei 190 °C im Bereich von 100 bis 30 000 mPas besitzt, gemessen in Anlehnung an DIN 53 019 in einem Rotationsviskosimeter bei einer Schergeschwindigkeit von 30,5 s⁻¹,
   wobei sich die Gew.-Teile von (a) und (b) auf 100 ergänzen,
(c) 0,5 bis 400 Gew.-Teile eines Verstärkungsmittels, ausgenommen solche Formmassen, bei denen als Verstärkungsmittel weniger als 28 Gew.-Teile Schwerspat verwendet wird.

Der Thermoplast [Komponente (a)] kann beispielsweise ein Polyolefin, ein Polystyrol, ein Polyphenylenether, ein Polykondensat wie Polyester oder Polyamid, ein Polyurethan und/oder ein Kautschuk sein.

Geeignete Polyolefine sind grundsätzlich jedes Polyolefin des Standes der Technik, beispielsweise Polyethylen, Polypropylen und Poly-1-buten, aber auch Copolymere von Ethen, Propen bzw. 1-Buten, entweder als Randomcopolymer wie z. B. LLDPE oder Propen-Ethen-Randomcopolymere mit etwa 1 - 15 Gew.-% Ethen, oder als Blockcopolymere wie z. B. Propen-Ethen-Blockcopolymere. Genauso kann das Polyolefin ein weitgehend amorphes Polyolefin sein, wie es als Pfropfgrundlage für die Komponente (b) verwendet werden kann. Das Polyolefin kann auch einen Kautschuk als Schlagzähmacher enthalten, beispielsweise Ethen/Propen-Kautschuk (EPM) oder Ethen/Propen/Dien-Kautschuk (EPDM). Alle diese Polymere sind dem Fachmann wohlbekannt, weshalb sich eine weitere Beschreibung erübrigt.

Das Polystyrol kann entweder als solches oder in kautschukmodifizierter Form eingesetzt werden, wobei die Wahl des Kautschukes, etwa Butadienkautschuk (BR), EPDM, Styrol-Butadien-Styrol-Blockpolymere (SBS) oder Polyoctenamer (TOR), unkritisch ist. Das Polystyrol kann als Homopolymeres vorliegen; es kann aber auch zur Erhöhung der Wärmeformbeständigkeit Comonomere wie α-Methylstyrol, Acrylnitril, Methylmethacrylat oder N-Phenylmaleinimid einpolymerisiert enthalten.

Polyphenylenether entstehen durch oxidative Kopplung von 2,6-Dialkylphenolen; sie sind beispielsweise in den US-PSS 3 306 874 und 3 306 875 sowie in der EP-A-0 122 394 beschrieben. Üblicherweise werden sie als Polymerblend mit Polystyrol verwendet.

Geeignete Polyester sind beispielsweise Polyethylenterephthalat, Polybutylenterephthalat oder Copolyester, die 1.4-Cyclohexandimethanol als Comonomer enthalten.

Als Polyamid (PA) kann jeder verfügbare Typ eingesetzt werden, beispielsweise PA 46, PA 6, PA 66, PA 612, PA 1010, PA 1012, PA 11, PA 12, PA 1212 oder PA 6,3 T. Diese Typen brauchen dem Fachmann nicht näher erläutert zu werden.

Geeignete Polyurethane sind diejenigen, die thermoplastisch verarbeitbar sind, wobei die Art der eingesetzten Monomeren unkritisch ist.

Als geeigneter Kautschuk seien beispielsweise erwähnt:
EPM, EPDM, SBS, hydrierte Styrol-Butadien-Styrol-Blockpolymere (SEBS), SIS, Styrol-Butadien-Kautschuk (SBR), Butadienkautschuk (BR), Siliconkautschuk, Naturkautschuk (NR), Butylkautschuk und Chloroprenkautschuk. Dem Fachmann ist bekannt, daß derartige Kautschuke in den Kautschukcompounds als Mischungen mehrerer Kautschuktypen vorliegen können, wobei die Compounds üblicherweise, neben Füllstoffen, auch Weichmacheröle, Vulkanisationsmittel und ggf. Vulkanisationsbeschleuniger enthalten.

Insgesamt bevorzugte Thermoplasten sind diejenigen, die teilkristallin sind.

Weiterhin sind wegen der guten Verträglichkeit mit der Komponente (b) Polyolefine bevorzugt.

Die Formmasse enthält bevorzugt 1 bis 97 Gew.-Teile, besonders bevorzugt 10 bis 96 Gew.-Teile und ganz besonders bevorzugt 20 bis 95 Gew.-Teile des bzw. der Thermoplaste.

Das weitgehend amorphe Polyolefin hat die Zusammensetzung
3 bis 95 Gew.-% eines α-Olefins mit 4 bis 10 Kohlenstoffatomen,
5 bis 97 Gew.-% Propen und
0 bis 20 Gew-% Ethen.

Das α-Olefin mit 4 bis 10 Kohlenstoffatomen ist insbesondere 1-Buten, 1-Hexen oder 1-Octen.

Als weitgehend amorphes Polyolefin der Komponente (b) können beispielsweise Ethen-Propen-1-Buten-Terpolymere, Propen-1-Buten-Copolymere, Ethen-Propen-1-Hexen-Terpolymere, Ethen-Propen-1-Octen-Terpolymere, Etheti-1-Buten-1-Hexen-Terpolymere, Ethen-1-Buten-1-Octen-Terpolymere, Ethen-1-Hexen-1-Octen-Terpolymere, Propen-1-Buten-1-Hexen-Terpolymere, Propen-1-Buten-1-Octen-Terpolymere oder Propen-1-Hexen-1-Octen-Terpolymere verwendet werden.

Die Herstellung derartiger Copolymere bzw. Terpolymere ist unter anderem in der EP-A-0 023 249 beschrieben; sie sind beispielsweise unter der Bezeichnung VESTOPLAST im Handel erhältlich. Entsprechende Typen sind üblicherweise vollständig oder weitgehend amorph.

Der kristalline Anteil kann beispielsweise durch Bestimmen der Schmelzenthalpie mittels der DSC-Methode abgeschätzt werden. Hierbei wird eine abgewogene Probe zunächst mit einer Aufheizgeschwindigkeit von 10 °C/min von - 100 °C bis + 210 °C aufgeheizt, dann mit einer Geschwindigkeit von 10 °C/min wieder auf - 100 °C abgekühlt. Nachdem auf diese Weise die thermische Vorgeschichte der Probe eliminiert wurde, wird wiederum mit einer Geschwindigkeit von 10 °C/min auf 210 °C erhitzt und hierbei durch Integration des Schmelzpeaks, der auf den Kristallitschmelzpunkt Tₘ zurückzuführen ist, die Schmelzenthalpie der Probe bestimmt. Im Rahmen der Erfindung beträgt die Schmelzenthalpie des weitgehend amorphen Polyolefins maximal 100 J/g, bevorzugt maximal 60 J/g und besonders bevorzugt maximal 30 J/g.

Das aufzupfropfende Silan besitzt vorzugsweise drei direkt mit dem Silicium verbundene Alkoxygruppen Beispielhaft seien Vinyltrimethoxysilan (VTMO), Vinyltriethoxysilan, Vinyl-tris(2-methoxy-ethoxy)silan, 3-Methacryloxypropyltrimethoxysilan [MEMO; H₂C=C(CH₃)COO(CH₂)₃-Si(OCH₃)₃], 3-Methacryloxypropyltriethoxysilan, Vinyldimethytmethoxysilan oder Vinylmethyldibutoxysilan genannt. Das Silan wird bei der Pfropfung üblicherweise in Mengen von 0,1 bis 10 Gew.-%, vorzugsweise 0,5 bis 5 Gew.-%, bezogen auf das Polyolefin, eingesetzt.

Das ungesättigte Silan kann auf das weitgehend amorphe Polyolefin nach allen Methoden des Standes der Technik aufgepfropft werden, beispielsweise in Lösung oder bevorzugt in der Schmelze, wobei ein Radikalspender in ausreichender Menge eingesetzt wird. Eine geeignete Arbeitsweise kann der DE-OS 40 00 695 entnommen werden.

Das gepfropfte weitgehend amorphe Polyolefin besitzt bevorzugt eine Schmelzeviskosität von mindestens 1 000 mPas.

Das Verstärkungsmittel kann entweder ein Füllstoff wie z. B. Aluminiumoxid, Talkum, Schwerspat, Tonmehl, Siliciumdioxid, Ruß, Calciumcarbonat, Titandioxid, Glimmer, Kaolinit, Glasflocken, Diatomeenerde, Glaskugeln oder ein faserartiges Verstärkungsmittel wie Glasfasern, Kohlenstoffasern oder Einkristallfäden sein. Selbstverständlich können auch Mischungen derartiger Füllstoffe eingesetzt werden.

Bevorzugt enthält die Zusammensetzung 4 bis 200 und besonders bevorzugt 8 bis 100 Gew.-Teile des Verstärkungsmittels. Weiterhin ist bevorzugt, daß die Zusammensetzung entweder ein faserartiges Verstärkungsmittel oder mindestens 28 Gew.-Teile eines Füllstoffes enthält. Darüber hinaus ist bevorzugt, daß die Zusammensetzung mindestens 28 Gew.-Teile eines Verstärkungsmittels enthält.

Die erfindungsgemäße Zusammensetzung kann nach allen üblichen Methoden hergestellt werden. Man kann zunächst das weitgehend amorphe Polyolefin wie oben angegeben mit dem ungesättigten Silan pfropfen und danach alle Komponenten gleichzeitig in einem Kneter bzw. Extruder, z. B. einem Doppelschneckenextruder, mischen. Eine verbesserte Variante besteht darin, daß das weitgehend amorphe Polyolefin in einem Beistellextruder gepfropft und in die Schmelze des bzw. der Thermoplaste dosiert wird. An der gleichen Stelle oder stromabwärts wird dann das Verstärkungsmittel zudosiert und gründlich eingemischt.

Besonders-vorteilhaft geht man vor, wenn in der vorderen Zone eines Extruders das weitgehend amorphe Polyolefin zunächst gepfropft wird und dann in die Schmelze das Verstärkungsmittel eingearbeitet wird. Man kann jedoch auch so vorgehen, daß man zunächst das Verstärkungsmittel in die Schmelze des weitgehend amorphen Polyolefins einarbeitet und anschließend die Pfropfung durch Eindosieren des ungesättigten Silans und eines Radikalspenders durchführt. In beiden Fällen kann das entstandene verstärkte und gepfropfte, weitgehend amorphe Polyolefin entweder als Strang ausgetragen und zur weiteren Abmischung als Masterbatch mit dem Thermoplasten [Komponente (a)] zunächst granuliert oder durch Spritzguß bzw. Extrusion zu Formteilen verarbeitet oder aber als Schmelze in die Schmelze eines oder mehrerer Thermoplaste [Komponente (b)], beispielsweise Polypropylen, eindosiert werden.

Das gepfropfte, weitgehend amorphe Polyolefin kann anschließend in der Mischung mit Verstärkungsmittel und ggf. Thermoplast vernetzt werden, was am einfachsten durch Einwirken von Wasser erzielt wird. Je nach Erfordernissen des Anwenders geschieht dies mittels Wasserdampf aus der Umgebungsluft, durch Wasserdampf, der in einem Gasstrom enthalten ist, durch Dampf- bzw. Heißwasserbehandlung oder durch Wasser, welches im Thermoplasten enthalten ist (insbesondere bei Polyamiden; eingeschränkt auch bei Polyestern). Diese Vernetzung kann am Formteil durchgeführt werden; es ist aber auch möglich, die Vernetzung in der Schmelze oder am Granulat vorzunehmen, insbesondere um höherviskose, für Extrusion geeignete Formmassen herzustellen.

Mit der Vernetzung erhält die Zusammensetzung eine höhere Wärmeformbeständigkeit und noch weiter verbesserte Reißfestigkeit; außerdem wird die Phasenmorphologie stabilisiert, so daß bei weiterer thermoplastischer Verarbeitung keine nachteiligen Eigenschaftsänderungen auftreten.

Bei der vorliegenden Erfindung hat sich gegenüber dem- Stand der Technik überraschenderweise als zusätzlicher Vorteil erwiesen, daß sich diese Vernetzung schneller durchführen läßt, als wenn man gemäß dem Stand der Technik teilkristalline silangepfropfte Polyolefine einsetzt. Eine mögliche Erklärung hierfür könnte darin bestehen, daß die zur Vernetzung fähigen Gruppen weitestgehend in amorpher Phase vorliegen und, da der Glasübergangspunkt dieser amorphen Phase im Regelfall deutlich unterhalb der Raumtemperatur liegt, ausreichend mobil sind, um miteinander in Wechselwirkung treten zu können.

Zur Erhöhung der Vernetzungsgeschwindigkeit kann der Zusammensetzung ein Vernetzungsbeschleuniger, üblicherweise eine Zinnorganylverbindung wie z. B. Dibutylzinndilaurat, zugesetzt werden. Dies kann entweder in reiner Form oder zur besseren Dosierbarkeit in Form eines Masterbatches erfolgen. Die Zugabe des Beschleunigers kann vor dem Aufschmelzen in Form einer Trockenmischung" oder nach dem Aufschmelzen geschehen. Dabei haben sich Gehalte von 0,001 bis 20 Gew.-%, vorzugsweise 0,01 bis 5 Gew.-% im Masterbatch als geeignet erwiesen, so daß die Formmasse dann etwa 0,0001 bis 1 Gew.-% Vernetzungsbeschleuniger enthält.

Andererseits läßt sich, falls gewünscht, durch Zusatz nicht gepfropfter, leicht hydrolysierender Silane wie Hexadecyltrimethoxysilan oder Hexadecyltriethoxysilan die Vernetzungsgeschwindigkeit verringern. Das in die Zusammensetzung eindffundierende Wasser wird von diesen Silanen zumindest teilweise abgefangen, so daß es länger dauert, bis das zur Vernetzung des silangepfropften Polyolefins notwendige Wasser in der Formmasse zur Verfügung steht. Es empfiehlt sich, zu diesem Zweck Silane mit langkettigen Alkylresten zu verwenden, da diese beim Aufschmelzen der Produkte nicht verdampfen und so nicht als Wirkstoff verlorengehen und darüber hinaus keine Entsorgungs- und Arbeitsschutzprobleme verursachen.

Ob für eine der gewünschten Anwendungen der Einsatz von Vernetzungsbeschleunigern oder Vernetzungsverzögerern erforderlich ist, kann der Fachmann anhand einiger orientierender Versuche leicht selbst ernitteln.

Die außerordentlich starke Adhäsion der silangepfropften Polyolefine zu polaren Oberflächen im allgemeinen und zu OH-Gruppen-tragenden Oberflächen im speziellen führt zu einer deutlich verbesserten Anbindung der thermoplastischen Matrix an Füllstoffe jeder Art, insbesondere an Glasfasern. Zusätzlich führen die niedrige Schmelzeviskosität der Mischung und insbesondere die guten Fließeigenschaften des gepfropften, weitgehend amorphen Polyolefins zu einer verbesserten Substratbenetzung. Beides bewirkt eine starke Verbesserung der ReiBfestigkeit.

Ein weiterer Vorteil der Erfindung besteht darin, daß faserförmige oder blättchenförmige Verstärkungsmittel wegen der niedrigen Schmelzeviskosität der Mischung bei der Einarbeitung geschont werden. Dies führt zu verbesserter Anisotropie der mechanischen Eigenschaften wie Elastizitätsmodul und Reißfestigkeit.

Gleichermaßen ursächlich für die erhaltenen guten mechanischen Eigenschaften ist auch die gute Kompatibilität zwischen dem Thermoplasten (a) und dem silangepfropften Polyolefin (b). Ist der Thermoplast (a) ein Polyolefin, so liegt eine strukturelle Ähnlichkeit vor. Ist der Thermoplast (a) hingegen ein Polykondensat, so resultiert eine ausreichende Kompatibilität durch die Reaktion der aufgepfropften Alkoxysilangruppen mit funktionellen Gruppen wie -OH, -NH₂, -COOH, die als Endgruppen im Polykondensat enthalten sind.

Bei höherem Gehalt an der Komponente (a) wird die erfindungsgemäße Zusammensetzung in erste Linie zur Herstellung von Formteilen verwendet.

Bei niedrigem Gehalt hiervon oder bei Fehlen der Komponente (a) kann die erfindungsgemäße Zusammensetzung vorteilhafterweise für Teppichschwerbeschichtungsmassen, die vernetzt sein können, oder für ähnliche Anwendungen oder als Schmelzkleber in den Fällen, wo eine besondere Festigkeit der Klebefuge verlangt wird, eingesetzt werden. Hier kann die Kriechneigung (kalter Fluß") durch die Vernetzung wirkungsvoll unterbunden werden.

Bei Fehlen der Komponente (a) kann die Zusammensetzung darüber hinaus als Masterbatch zur Herstellung erfindungsgemäßer verstärkter Thermoplasten verwendet werden.

Die Erfindung soll im folgenden beispielhaft erläutert werden.

### Beispiel 1:

Zur Herstellung eines silangepfropften Polyolefins wurde ein weitgehend amorphes Poly-α-Olefin folgender Monomerenzusammensetzung verwendet:
6 Gew-% Ethen
64 Gew.-% Propen
30 Gew.-% 1-Buten.

In einem Doppelschneckenextruder (Berstorff ZE 40) wurde eine aus
92,9 Gew.-% dieses Poly-α-Olefins,
6,0 Gew.-% Vinyltrimethoxysilan (DYNASYLAN® VTMO)
   und
1,1 Gew.-% Dicumylperoxid

bestehende Mischung unter Luft- und Feuchtigkeitsausschluß bei einer Temperatur von etwa 170 °C gemischt und über eine Verweilzeit von ca. 90 s auf dieser Temperatur gehalten. Das überschüssige VTMO wurde in der letzten Zone des Extruders bei einem Vakuum von ca. 20 mbar verdampft und in Kühlfallen kondensiert. Das Produkt wurde durch die Zugabe von IRGANOX® 1076 stabilisiert. Seine Schmelzeviskosität bei 190 °C betrug 6 000 mPas.

### Beispiel 2:

Das Produkt aus Beispiel 1 wurde bei 180 °C in einer Stickstoffatmosphäre aufgeschmolzen. 95 Gew.-Teile hiervon wurden in einem Laborkneter 15 Minuten lang bei ca. 180 °C mit 5 Gew.-Teilen Glasfasern (Owens Corning CS 429 YZ; zum Entschlichten vorher ca. 1 h auf 550 °C erhitzt) sowie 0,2 Gew.-Teilen eines phenolischen Stabilisators (IRGANOX® 1076) gemischt. Aus dieser Mischung wurden geeignete Prüfkörper zur Messung der Reißfestigkeit nach DIN 53455 (Stab 4) hergestellt und nach verschiedenen Lagerzeiten geprüft. Die Ergebnisse dieser Messungen sind in der Tabelle 1 dargestellt.

### Beispiel 3:

Das Produkt aus Beispiel 1 wurde bei 180 °C in einer Stickstoffatmosphäre aufgeschmolzen. 95 Gew.-Teile hiervon, 5 Gew.-Teile eines Beschleunigers in Form eines Masterbatches aus 98 Gew.-% eines amorphen Poly-α-Olefins (VESTOPLAST® 708) und 2 Gew.-% Dibutylzinndilaurat sowie 5 Gew.-Teile Glasfasern und 0,2 Gew.-Teile eines phenolischen Stabilisators (IRGANO® 1076) wurden nacheinander in einen Laborkneter gegeben und wie im Beispiel 2 gemischt. Aus dieser Mischung wurden geeignete Prüfkörper zur Messung der Reißfestigkeit nach DIN 53455 (Stab 4) hergestellt und nach verschiedenen Lagerzeiten geprüft. Die Ergebnisse dieser Messungen sind in der Tabelle 1 dargestellt.

### Beispiel 4: (nicht erfindungsgemäß)

Hier wurde anstelle des Produkts aus Beispiel 1 das unfunktionalisierte amorphe Poly-α-Olefin VESTOPLAST® 708 eingesetzt, das von der Monomerenzusammensetzung der Kohlenwasserstofikette und der Schmelzviskosität her mit dem Produkt aus Beispiel 1 weitestgehend vergleichbar ist.

VESTOPLAST® 708 wurde bei 180 °C in einer Stickstoffatmosphäre aufgeschmolzen. 95 Gew.-Teile hiervon wurden in einem Laborkneter wie im Beispiel 2 mit 5 Gew.-Teilen Glasfaser (wie im Beispiel 2) und 0,2 Gew.-Teilen IRGANOX® 1076 gemischt. Anschließend wurde wie im Beispiel 2 weiter vorgegangen. Die Ergebnisse der Messungen sind in der Tabelle 1 dargestellt.

**Tabelle 1**

| | | **Beispiel 2** | **Beispiel 3** | **Beispiel 4 (nicht erfindungsgemäß)** |
|---|---|---|---|---|
| Produkt aus Beispiel 1 | Teile | 95 | 95 | - |
| Beschleuniger-Masterbatch | Teile | - | 5 | - |
| VESTOPLAST® 708 | Teile | - | - | 95 |
| Glasfaser | Teile | 5 | 5 | 5 |
| IRGANOX® 1076 | | 0,2 | 0,2 | 0,2 |

| Zugversuch in Anlehnung an DIN 53455, Stab 4 | | | | |
|---|---|---|---|---|
| Reißfestigkeit nach 1 Woche Lagerzeit | N/mm² | 3,7 | 3,7 | 1,6 |
| Reißfestigkeit nach 2 Wochen Lagerzeit | N/mm² | 4,2 | 5,4 | 1,6 |
| Reißfestigkeit nach 4 Wochen Lagerzeit | N/mm² | 4,6 | 5,7 | 1,7 |

### Beispiel 5: (nicht erfindungsgemäß)

50 Gew.-Teile VESTOPLAST® 708 wurden unter einer Stickstoffatmosphäre in der Schmelze in einem Laborkneter mit 50 Gew.-Teilen Schwerspat (Schwerspatmehl CH 1177 der Fa. Sachtleben) sowie 0,2 Gew.-Teilen IRGANOX® 1010, eines Stabilisators gegen thermischen Abbau, bei 180 °C gemischt. Aus dieser Mischung wurden geeignete Prüfkörper zur Messung der Reißfestigkeit und der Reißdehnung nach DIN 53 455 (Stab 4) hergestellt und nach verschiedenen Lagerzeiten geprüft. Die Ergebnisse dieser Messungen sind in der Tabelle 2 dargestellt.

### Beispiel 6:

Analog zu Beispiel 5 mit dem alleinigen Unterschied, daß statt VESTOPLAST® 708 das Produkt aus Beispiel 1 verwendet wurde. Die Ergebnisse sind in der Tabelle 2 dargestellt.

### Beispiel 7: (nicht erfindungsgemäß)

Analog zu Beispiel 5 mit dem alleinigen Unterschied, daß statt Schwerspat ein Calcit (Mianit 0-30 der Fa. Eanström Mineral) eingesetzt wurde. Die Ergebnisse sind in der Tabelle 2 dargestellt.

### Beispiel 8:

Analog zu Beispiel 7 mit dem alleinigen Unterschied, daß statt VESTOPLAST® 708 das Produkt aus Beispiel 1 verwendet wurde. Die Ergebnisse sind in der Tabelle 2 dargestellt.

**Tabelle 2**

| | | Beispiel 5 (nicht erfindungsgemäß) | Beispiel 6 | Beispiel 7 (nicht erfindungsmäß) | Beispiel 8 |
|---|---|---|---|---|---|
| VESTOPLAST® 708 | Teile | 50 | - | 50 | - |
| Product aus Beispiel 1 | Tiele | - | 50 | - | 50 |
| Schwerspat | Teile | 50 | 50 | - | - |
| Calcit | Teile | - | - | 50 | 50 |
| IRGANOX® 1010 | Teile | 0,2 | 0,2 | 0,2 | 0,2 |

| Reißfestigkeit | | | | | |
|---|---|---|---|---|---|
| nach | | | | | |
| 1. Tag | N/mm² | 0,92 | 1,23 | ^{a)} | 1,22 |
| 2. Tag | N/mm² | ^{a)} | ^{a)} | 0,97 | ^{a)} |
| 3. Tag | N/mm² | 0,96 | 1,21 | ^{a)} | 1.33 |
| 4. Tag | N/mm² | ^{a)} | ^{a)} | ^{a)} | ^{a)} |
| 5. Tag | N/mm² | ^{a)} | ^{a)} | 1,05 | ^{a)} |
| 1. Woche | N/mm² | 1 | 1,4 | 1,11 | 1,6 |
| 2. Woche | N/mm² | 1,05 | 1,6 | 1,21 | 1,69 |
| 4. Woche | N/mm² | ^{a)} | 1,78 | ^{a)} | 1,89 |
| 10. Woche | N/mm² | ^{a)} | 2,26 | ^{a)} | 2,39 |

| Reißdehnung | | | | | |
|---|---|---|---|---|---|
| nach | | | | | |
| 1.Tag | % | 105 | 227 | ^{a)} | 167 |
| 2. Tag | % | ^{a)} | ^{a)} | 61 | ^{a)} |
| 3. Tag | % | 81 | 186 | ^{a)} | 134 |
| 4. Tag | % | ^{a)} | ^{a)} | ^{a)} | ^{a)} |
| 5. Tag | % | ^{a)} | ^{a)} | 56 | ^{a)} |
| 1. Woche | % | 70 | 200 | 49 | 189 |
| 2. Woche | % | 64 | 226 | 42 | 207 |
| 4. Woche | % | ^{a)} | 265 | ^{a)} | 259 |
| 10. Woche | % | ^{a)} | 297 | ^{a)} | 192 |

| | | | | | |
|---|---|---|---|---|---|
| ^{a)} nicht gemessen | | | | | |

## Patentansprüche

1. Zusammensetzung, die im wesentlichen folgende Komponenten enthält:
(a) 0 bis 98 Gew.-Teile eines oder mehrerer Thermoplaste,
(b) 2 bis 100 Gew.-Teile eines weitgehend amorphen Polyolefins, das mit einem Silan radikalisch gepfropft ist, welches mindestens eine olefinische Doppelbindung sowie eine bis drei direkt mit dem Silicium verbundene Alkoxygruppen besitzt,
wobei dieses gepfropfte Polyolefin eine Schmelzeviskosität bei 190 °C im Bereich von 100 bis 30 000 mPas besitzt und sich die Gew.-Teile von (a) und (b) auf 100 ergänzen, und wobei das weitgehend amorphe Polyolefin folgende Monomerenzusammensetzung besitzt:
3 bis 95 Gew.% eines α-Olefins mit 4 bis 10 Kohlenstoffatomen;
5 bis 97 Gew.% Propen und
0 bis 20 Gew. ;% Ethen,
(c) 0,5 bis 400 Gew.-Teile eines Verstärkungsmittels,
ausgenommen solche Formmassen, bei denen als Verstärkungsmittel weniger als 28 Gew.-Teile Schwerspat verwendet wird.

2. Zusammensetzung gemäß Anspruch 1,
die 1 bis 97 Gew.-Teile eines oder mehrerer Thermoplaste enthält.

3. Zusammensetzung gemäß Anspruch 1,
die 10 bis 96 Gew.-Teile eines oder mehrerer Thermoplaste enthält.

4. Zusammensetzung gemäß Anspruch 1,
die 20 bis 95 Gew.-Teile eines oder mehrerer Thermoplaste enthält.

5. Zusammensetzung gemäß einem der vorhergehenden Ansprüche,
**dadurch gekennzeichnet,**
**daß** der Thermoplast ein Polyolefin, ein Polystyrol, ein Polyphenylenether, ein Polykondensat, ein Polyurethan und/oder ein Kautschuk ist.

6. Zusammensetzung gemäß einem der vorhergehenden Ansprüche,
**dadurch gekennzeichnet,**
**daß** das weitgehend amorphe Polyolefin ein Ethen-Propen-1-Buten-Terpolymer, ein Propen-1-Buten-Copolymer, ein Ethen-Propen-1-Hexen-Terpolymer, ein Ethen-Propen-1-Octen-Terpolymer, ein Ethen-1-Buten-1-Hexen-Terpolymer, ein Ethen-1-Buten-1-Octen-Terpolymer, ein Ethen-1-Hexen-1-Octen-Terpolymer, ein Propen-1-Buten-1-Hexen-Terpolymer, ein Propen-1-Buten-1-Octen-Terpolymer oder ein Propen-1-Hexen-1-Octen-Terpolymer ist.

7. Zusammensetzung gemäß einem der vorhergehenden Ansprüche,
**dadurch gekennzeichnet,**
**daß** das gepfropfte, weitgehend amorphe Polyolefin eine Schmelzeviskosität von mindestens 1 000 mPas besitzt.

8. Zusammensetzung einem der vorhergehenden Ansprüche,
**dadurch gekennzeichnet,**
**daß** das Verstärkungsmittel ein Füllstoff oder ein faserartiges Verstärkungsmittel ist.

9. Zusammensetzung gemäß einem der vorhergehenden Ansprüche,
die 4 bis 200 Gew.-Teile eines Verstärkungsmittels enthält.

10. Zusammensetzung gemäß einem der vorhergehenden Ansprüche,
die 8 bis 100 Gew.-Teile eines Verstärkungsmitfels enthält.

11. Zusammensetzung gemäß einem der vorhergehenden Ansprüche,
die entweder ein faserartiges Verstärkungsmittel oder mindestens 28 Gew.-Teile eines Füllstoffes enthält.

12. Zusammensetzung gemäß einem der vorhergehenden Ansprüche,
die mindestens 28 Gew.-Teile eines Verstärkungsmittels enthält.

13. Zusammensetzung gemäß einem der vorhergehenden Ansprüche,
**dadurch gekennzeichnet,**
**daß** das Verstärkungsmittel ausgewählt ist aus Aluminiumoxid, Talkum, Schwerspat, Tonmehl, Siliciumdioxid, Ruß, Calciumcarbonat, Titandioxid, Glimmer, Kaolinit, Glasflocken, Diatomeenerde, Glaskugeln, Glasfasern, Kohleristoffasern, Einkristallfäden oder Mischungen daraus.

14. Zusammensetzung gemäß einem der vorhergehenden Ansprüche,
**dadurch gekennzeichnet,**
**daß** sie zusätzlich einen Vemetzungsbeschieuniger enthält.

15. Zusammensetzung gemäß einem der vorhergehenden Ansprüche,
**dadurch gekennzeichnet,**
**daß** das silangepfropfte, weitgehend amorphe Polyolefin vernetzt ist.

16. Verfahren zur Herstellung der Zusammensetzung gemäß einem der Ansprüche 1 bis 15,
**dadurch gekennzeichnet,**
**daß** das Verstärkungsmittel in die Schmelze des gepfropften, weitgehend amorphen Polyolefins eingearbeitet wird.

17. Verfahren zur Herstellung der Zusammensetzung gemäß einem der Ansprüche 1 bis 15,
**dadurch gekennzeichnet,**
**daß** das Verstärkungsmittel in die Schmelze des weitgehend amorphen Polyolefins eingearbeitet und anschließend die Pfropfung durch Eindosieren des ungesättigten Silans und eines Radikalspenders durchgeführt wird.

18. Verfahren zur Herstellung der Zusammensetzung gemäß einem der Ansprüche 1 bis 15,
**dadurch gekennzeichnet,**
**daß** die Mischung, die gemäß einem der Ansprüche 18 und 19 erhalten wird, mit dem bzw. den Thermoplasten [Komponente (a)] abgemischt wird.

19. Verfahren gemäß Anspruch 18,
**dadurch gekennzeichnet,**
**daß** der Thermoplast Polypropylen ist.

20. Verfähren zur Herstellung der Zusammensetzung gemäß einem der Ansprüche 1 bis 15,
**dadurch gekennzeichnet,**
**daß** das in der Zusammensetzung erfthaltene silangepfropfte, weitgehend amorphe Polyolefin vemetzt wird.

21. Verfahren gemäß Anspruch 20,
**dadurch gekennzeichnet,**
**daß** die Vernetzung mittels Wasserdampf aus der Umgebüngshift, durch Wasserdampf, der in einem Gasstrom enthalten ist, durch Dampf- oder Heißwasserbehandlung oder durch Wasser, welches im Thermoplasten enthalten ist, durchgeführt wird.

22. Verfahren gemäß einem der Ansprüche 20 und 21;
**dadurch gekennzeichnet,**
**daß** die Vernetzung in der Schmelze, am Granulat oder am Formteil durchgeführt wird.

23. Verwendung der Zusammensetzung gemäß einem der Ansprüche 1 bis 15 oder der gemäß einem der Ansprüche 16 bis 22 hergestellten Zusammensetzung für Formteile, Teppichschwerbeschichtungsmassen, Schmelzkleber oder als Masterbatch.

## Claims

1. A composition which essentially contains the following components:
(a) from 0 to 98 parts by weight of one or more thermoplastics,
(b) from 2 to 100 parts by weight of a substantially amorphous polyolefin which has been subjected to free radical grafting with a silane which has at least one olefinic double bond and one to three alkoxy groups bonded directly to the silicon,
this grafted polyolefin having a melt viscosity at 190°C in the range from 100 to 30 000 mPas and the parts by weight of (a) and (b) summing to 100, and the substantially amorphous polyolefin having the following monomer composition:
from 3 to 95% by weight of an α-olefin having 4 to 10 carbon atoms;
from 5 to 97% by weight of propene and
from 0 to 20% by weight of ethene, and
(c) from 0.5 to 400 parts by weight of a reinforcing material,
with the exception of those compositions in which less than 28 parts by weight of barite are used as reinforcing material.

2. A composition according to claim 1, which contains from 1 to 97 parts by weight of one or more thermoplastics.

3. A composition according to claim 1, which contains from 10 to 96 parts by weight of one or more thermoplastics.

4. A composition according to claim 1, which contains from 20 to 95 parts by weight of one or more thermoplastics.

5. A composition according to any one of the preceding claims, **characterized in that** the thermoplastic is a polyolefin, a polystyrene, a polyphenylene ether, a polycondensate, a polyurethane and/or a rubber.

6. A composition according to any one of the preceding claims, **characterized in that** the substantially amorphous polyolefin is an ethene/propene/1-butene terpolymer, a propene/1-butene copolymer, an ethene/propene/1-hexene terpolymer, an ethene/propene/1-octene terpolymer, an ethene/1-butene/1-hexene terpolymer, an ethene/1-butene/1-octene terpolymer, an ethene/1-hexene/1-octene terpolymer, a propene/1-butene/1-hexene terpolymer, a propene/1-butene/1-octene terpolymer or a propene/1-hexene/1-octene terpolymer.

7. A composition according to any one of the preceding claims, **characterized in that** the grafted, substantially amorphous polyolefin has a melt viscosity of at least 1000 mPas.

8. A composition according to any one of the preceding claims, **characterized in that** the reinforcing material is a filler or a fibrous reinforcing material.

9. A composition according to any one of the preceding claims, which contains from 4 to 200 parts by weight of a reinforcing material.

10. A composition according to any one of the preceding claims, which contains from 8 to 100 parts by weight of a reinforcing material.

11. A composition according to any one of the preceding claims, which contains either a fibrous reinforcing material or at least 28 parts by weight of a filler.

12. A composition according to any one of the preceding claims, which contains at least 28 parts by weight of a reinforcing material.

13. A composition according to any one of the preceding claims, **characterized in that** the reinforcing material is selected from alumina, talc, barite, clay powder, silica, carbon black, calcium carbonate, titanium dioxide, mica, kaolinite, glass flakes, kieselguhr, glass beads, glass fibres, carbon fibres, single crystal filaments or mixtures thereof.

14. A composition according to any one of the preceding claims, **characterized in that** it additionally contains a crosslinking accelerator.

15. A composition according to any one of the preceding claims, **characterized in that** the silane-grafted, substantially amorphous polyolefin is crosslinked.

16. A process for the preparation of the composition according to any one of claims 1 to 15, **characterized in that** the reinforcing material is incorporated into the melt of the grafted, substantially amorphous polyolefin.

17. A process for the preparation of the composition according to any one of claims 1 to 15, **characterized in that** the reinforcing material is incorporated into the melt of the substantially amorphous polyolefin and the grafting is then carried out by metering in the unsaturated silane and a free radical donor.

18. A process for the preparation of the composition according to any one of claims 1 to 15, **characterized in that** the mixture which is obtained according to either of claims 16 and 17 is mixed with the thermoplastic or thermoplastics [component (a)].

19. A process according to claim 18, **characterized in that** the thermoplastic is polypropylene.

20. A process for the preparation of the composition according to any of Claims 1 to 15, **characterized in that** the silane-grafted, substantially amorphous polyolefin contained in the molding material is crosslinked.

21. A process according to claim 20, **characterized in that** the crosslinking is carried out by means of water vapour from the surrounding air, by water vapour which is contained in a gas stream, by steam or hot water treatment or by water which is contained in the thermoplastic.

22. A process according to either of claims 20 and 21, **characterised in that** the crosslinking is carried out in a melt, on granules or on a moulding.

23. The use of the composition according to any one of claims 1 to 15 or of the composition prepared according to any one of claims 16 to 22 for shaped articles, heavy-duty carpet backing materials, hotmelt adhesives, or as a masterbatch.

## Revendications

1. Composition contenant essentiellement les composants suivants :
(a) 0 à 98 parties en poids d'un ou plusieurs thermoplastes,
(b) 2 à 100 parties en poids d'une polyoléfine largement amorphe greffée par voie radicalaire avec un silane qui possède au moins une double liaison oléfinique ainsi qu'un à trois groupes alcoxy directement liés au silicium,
cette polyoléfine greffée ayant une viscosité à chaud à 190°C de l'ordre de 100 à 30.000 mPas et les parties en poids (a) et (b) se complétant pour en former 100, la polyoléfine largement amorphe ayant la composition monomère suivante :
3 à 95 % en poids d'une α-oléfine portant 4 à 10 atomes de carbone ; 5 à 97 % en poids de propène et
0 à 20 % en poids d'éthène,
(c) 0, 5 à 400 parties en poids d'un agent de renforcement,
à l'exception des matières à mouler pour lesquelles on utilise moins de 28 parties en poids de barytine en tant qu'agent de renforcement.

2. Composition selon la revendication 1,
qui contient 1 à 97 parties en poids d'un ou plusieurs thermoplastes.

3. Composition selon la revendication 1,
qui contient 10 à 96 parties en poids d'un ou plusieurs thermoplastes.

4. Composition selon la revendication 1,
qui contient 20 à 95 parties en poids d'un ou plusieurs thermoplastes.

5. Composition selon l'une quelconque des revendications précédentes, **caractérisée en ce que**
le thermoplaste est une polyoléfine, un polystyrène, un éther de polyphénylène, un polycondensat, un polyuréthane et/ou un caoutchouc.

6. Composition selon l'une quelconque des revendications précédentes, **caractérisée en ce que**
la polyoléfine largement amorphe est un terpolymère d'éthène-propène-1-butène, un copolymère de propène-1-butène, un terpolymère d'éthène-propène-1-hexène, un terpolymère d'éthène-propène-1-octène, un terpolymère d'éthène-1-butène-1-hexène, un terpolymère d'éthène-1-butène-1-octène, un terpolymère d'éthène-1-hexène-1-octène, un terpolymère de propène-1-butène-1-hexène, un terpolymère de propène-1-butène-1-octène ou un terpolymère de propène-1-hexène-1-octène.

7. Composition selon l'une quelconque des revendications précédentes, **caractérisée en ce que**
la polyoléfine greffée, largement amorphe a une viscosité à chaud d'au moins 1.000 mPas.

8. Composition selon l'une quelconque des revendications précédentes, **caractérisée en ce que**
l'agent de renforcement est une charge ou un agent de renforcement fibreux.

9. Composition selon l'une quelconque des revendications précédentes, qui contient 4 à 200 parties en poids d'un agent de renforcement.

10. Composition selon l'une quelconque des revendications précédentes,
qui contient 8 à 100 parties en poids d'un agent de renforcement.

11. Composition selon l'une quelconque des revendications précédentes,
qui contient soit un agent de renforcement fibreux soit au moins 28 parties en poids d'une charge.

12. Composition selon l'une quelconque des revendications précédentes,
qui contient au moins 28 parties en poids d'un agent de renforcement.

13. Composition selon l'une quelconque des revendications précédentes,
**caractérisée en ce que**
on choisit l'agent de renforcement parmi l'oxyde d'aluminium, le talc, la barytine, l'argile en poudre, le dioxyde de silicium, le noir de carbone, le carbonate de calcium, le dioxyde de titane, le mica, la kaolinite, les flocons de verre, les terres à diatomées, les billes de verre, les fibres de verre, les fibres de carbone, les fils de monocristal ou les mélanges de ces substances.

14. Composition selon l'une quelconque des revendications précédentes,
**caractérisée en ce qu'**
elle contient en plus un accélérateur de réticulation.

15. Composition selon l'une quelconque des revendications précédentes,
**caractérisée en ce que**
la polyoléfine greffée avec un silane et largement amorphe est réticulée.

16. Procédé de fabrication de la composition selon l'une quelconque des revendications 1 à 15,
**caractérisé en ce que**
l'agent de renforcement est incorporé dans la masse fondue de la polyoléfine greffée, largement amorphe.

17. Procédé de fabrication de la composition selon l'une quelconque des revendications 1 à 15,
**caractérisé en ce qu'**
on incorpore l'agent de renforcement dans la masse fondue de la polyoléfine largement amorphe, puis on réalise ensuite la greffe en incorporant par doses le silane insaturé et un donneur de radicaux.

18. Procédé de fabrication de la composition selon l'une quelconque des revendications 1 à 15,
**caractérisé en ce que**
la composition selon l'une quelconque des revendications 16 et 17, est mélangée avec le ou les aux thermoplastes [composants (a)].

19. Procédé selon la revendication 18,
**caractérisé en ce que**
le thermoplaste est du polypropylène.

20. Procédé de fabrication de la composition selon l'une quelconque des revendications 1 à 15,
**caractérisé en ce qu'**
on réticule la polyoléfine greffée avec un silane et largement amorphe contenue dans la composition.

21. Procédé selon la revendication 20,
**caractérisé en ce qu'**
on procède à la réticulation au moyen de vapeur d'eau provenant de l'air environnant, avec de la vapeur d'eau que l'on obtient dans un flux de gaz, par un traitement à la vapeur ou à l'eau surchauffée ou avec de l'eau, que l'on obtient dans le thermoplaste.

22. Procédé selon l'une quelconque des revendications 20 et 21,
**caractérisé en ce qu'**
on réalise la réticulation dans la masse fondue, sur le granulat ou sur la pièce moulée.

23. Utilisation de la composition selon l'une quelconque des revendications 1 à 15, ou selon la composition fabriquée selon l'une quelconque des revendications 16 à 22, pour des pièces moulées, des masses de revêtement lourd pour tapis, des colles fusibles ou en tant que mélange maître.
